Europäisches Patentamt

European Patent Office

Office européen des brevets

(19)

(11) Publication number: **0 261 672 B1**

## EUROPEAN PATENT SPECIFICATION

(12)

(45) Date of publication of patent specification: **13.03.91**    (51) Int. Cl.⁵: **C03C 21/00, G02B 6/10**

(21) Application number: **87113930.9**

(22) Date of filing: **23.09.87**

(54) Method of fabricating optical waveguides for the mid-infrared spectrum.

(30) Priority: **25.09.86 IT 6773286**

(43) Date of publication of application:
**30.03.88 Bulletin 88/13**

(45) Publication of the grant of the patent:
**13.03.91 Bulletin 91/11**

(84) Designated Contracting States:
**DE FR GB NL**

(56) References cited:
**FR-A- 2 396 981**

REVIEW OF SCIENTIFIC INSTRUMENTS, vol. 53, no. 9, September 1982, pages 1477-1478, American Institute of Physics, New York, US; D.L. PERSECHINI: "Technique for fabricating integrated optical devices in glasses by electric field enhanced ion diffusion"

CHEMICAL ABSTRACTS, vol. 98, no. 14, 4th April 1983, page 308, abstract no. 112497x, Columbus, Ohio, US; & JP-A-57 156 337 (NIPPON TELEGRAPH AND TELEPHONE PUBLIC CORP.) 27-09-1982

(73) Proprietor: **CSELT Centro Studi e Laboratori Telecomunicazioni S.p.A.**
**Via Guglielmo Reiss Romoli, 274**
**I-10148 Turin(IT)**

(72) Inventor: **De Bernardi, Carlo**
**C.so Monte Grappa, 56**
**I-10145 Torino(IT)**
Inventor: **Modone, Eros**
**Via Sant'Anna, 30**
**Balangero Torino(IT)**

(74) Representative: **Riederer Freiherr von Paar zu Schönau, Anton et al**
**Van der Werth, Lederer & Riederer Freyung**
**615 Postfach 2664**
**W-8300 Landshut(DE)**

## Description

The present invention refers to optical devices for light-signal processing and more particularly to a method of fabricating optical waveguides for the mid-infrared spectrum.

As known, some devices presently used for light signal processing in the integrated optics domain, consist of oxide-based glasses, namely silica ($SiO_2$), in which optical guides are traced apt to make the light radiation go along a wanted path.

The guiding region is generally fabricated by using a method which provides the diffusion of a doping material in the substrate material, or the replacement of the ions present at the beginning with extraneous ions, in order to obtain well-bounded regions where the refractive-index takes up particular values. Thus, a method according to the prior art portion of claim 1 is known e.g. from "Review of Scientific Instruments", Vol. 53, No. 9, September, 1982, pages 1477-1478, wherein a melt of $AgNo_3$ or $NaNo_3$ is used for diffusion of Ag + ions with the help of an electric field. The sort of glass and the dopant however, do not allow to use the method for very low attenuation values.

However, oxide-based glasses present high attenuation values at radiations with wavelengths belonging to the region of the electromagnetic spectrum named mid infrared, extending from visible end to about 12 $\mu$m. This region is nowadays of high interest, namely in the domain of telecommunications using light signals propagating along optical fibres. In fact, fibres can be made which present in the midinfrared a so low attenuation that very long trunks without intermediate repeaters are possible. Of course, these fibres require at their ends suitable signal processing devices.

Such fibres have been fabricated starting from halide based fibres, namely chlorides and fluorides. Methods of preparing such glasses are widely described in the technical literature, more particularly a method of producing fluorozirconate glasses is described in U.S. Patent No. 4,341,873, in the name of Hughes Aircraft Company.

Such methods are further known from FR-A 2 396 981 or Chemical Abstracts, Vol. 98, No. 14, 4-4-83, page 308, Abstract No. 112497x. Therein, the manufacture of optical fibres is described, having a cladding layer which has a lower refractive index than the core. This cladding layer is formed by decreasing the refractive index in the preform surface layer by ion exchange. However the use of such glasses in integrated-optics devices is unknown.

The attenuation disadvantage, presented by integrated-optics devices made of oxide-based glasses, are overcome by the method provided by the present invention, which allows the fabrication of optical guides apt to transmit radiations with wavelengths belonging to the mid-infrared region of the electromagnetic spectrum.

The present invention provides a method of fabricating mid-infrared optical guides in a glass-material substrate, comprising the steps of masking the substrate surfaces, so as to let free the only regions where the optical guide is to be made, and of diffusing a doping material that renders the refractive index of such regions higher, the diffusion being obtained by immersion of the masked substrate into a fused salt, into a solution or into a colloidal suspension of the doping compound and being started by high temperature and possibly by an electric field, characterized in that said substrate is made of fluorozirconate glass and the dopant is a cation bonded to a fluoride apt to increase the refractive index in the substrate regions where it diffuses.

The foregoing and other characteristics of the present invention will be made clearer by the following description of a preferred embodiment thereof, given by way of a non-limiting example, and by the annexed drawing in which the refractive index is represented in function of the percentage of different fluorides in a suitable vitreous matrix.

In the following example a method is described of fabricating an optical guide in a substrate made with a multicomponent fluoride-based glass. The main component being zircon fluoride, $ZrF_4$, such glasses are also referred to as fluorozirconate glasses.

Glasses prepared with mixtures of the $ZrF_4:BaF_2:TrF_3:X_aF_b$ or $ZrF_4:BaF_2:AlF_3:TrF_3:X_aF_b$ types are particularly advantageous, where Tr stands for any rare earth and X for an element whose concentration variation or whose substitution determines the required refr active-index variation. Variables a, b represent the number of elements X and F per molecule.

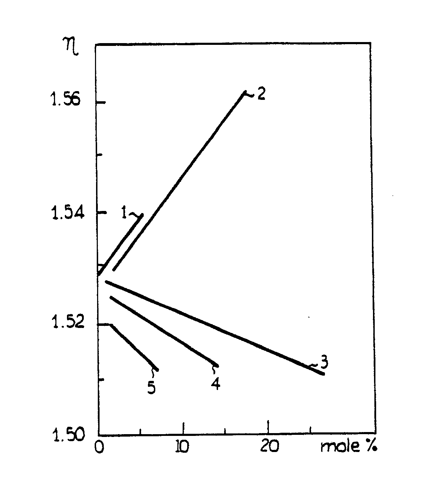

Fig. 1 shows a Cartesian diagram where refractive-index value $\eta$ is represented in function of the mole percent of different dopants in a mixture whose rare earth is gadolinium (Gd). Curves 1, 2, 3, 4 and 5 are referred respectively to $PbF_2$, $BiF_3$, LiF, NaF and $AlF_3$. With a matrix composed of other rare earth the behaviour is analogous.

Supposing that the element X the substrate is made of be one of those represented in the Figure, e.g. Na, its ion-exchange with Li is easily obtained, since they belong to the same group of the periodic table of the elements and ionic radius of lithium is smaller than that of sodium. Furthermore, electric conductivity values confirm a sufficient ionic mobility both for lithium and for sodium, raised at convenient temperature.

This exchange is particularly advantageous, since lithium fluoride raises the refractive index with respect to that obtained from sodium-fluoride presence, as it can be easily seen in the Figure, and thus it allows the fabrication of guiding optical paths for light radiation.

According to a first embodiment of the method, a fluorozirconate glass plate containing sodium fluoride is prepared for fabricating the optical guide conveniently masking its surfaces. This can be made by using the well-known lithographic techniques after depositing on the plate an even metallic or dielectric layer, and covering it with a photosensitive layer. This layer is exposed so as to facilitate the chemical etching of covering metallic or dielectric zones coinciding with those where the optical guide will be fabricated by a local alteration in the glass refractive index.

To this aim the masked plate is immersed in a fused lithium salt, or in a solution, or yet in a colloidal suspension of the same compound, and left for a determined time period at a temperature of 150°C or more, so as to obtain an enrichment in lithium ions and a depletion of sodium ions to the required depth.

The phenomenon takes place for ion diffusion owing to the concentration gradient existing in correspondence with the surface separating the plate and the bath and the higher the temperature, the quicker the process, and the longer the time interval during which the plate immersion lasts, the deeper the exchange zone.

In a second embodiment of the method the doping ion diffusion from the liquid to the plate is sped up by applying an electric field. To this aim a metallic layer is deposited on the face of the plate opposite to the masked one and is connected to the terminal of a current generator while an electrode immersed in the liquid is connected to the other terminal.

In this way the doping ion movement in the plate is sped up and addressed in the desired direction.

By a suitable combination of direction and intensity of the electric field, of temperature and process time, it is possible to obtain penetration depth, concentration profile and fraction of ion substitution of the involved region, varying in a wide interval and capable of being controlled in function of the desired applications for the guides obtained in this way.

## Claims

1. A method of fabricating mid-infrared optical guides in a glass-material substrate, comprising the steps of masking the substrate surface, so as to let free the only regions where the optical guide is to be made, and of diffusing a doping material consisting of a cation that increases the refractive index in the substrate region where it diffuses, the diffusion being obtained by immersion of the masked substrate into a fused salt, into a solution or into a colloidal suspension of a doping compound and being started by high temperature and possibly by an electric field, characterized in that said substrate is made of fluorozirconate glass and the cation in the doping compound is bonded to a fluoride.

2. A method as in claim 1, characterized in that said fluorozirconate glass has a composition of the $ZrF_4:BaF_2:TrF_3:X_aF_b$ type, where Tr is any rare earth, X is the atom of an element whose concentration variation or whose substitution determines the required refractive-index variation and a, b are the number of elements X and F per molecule.

3. A method as in claim 2, characterized in that said composition also comprises $AlF_3$.

4. A method as in claim 2 or 3, characterized in that said compound $X_aF_b$ is chosen out of $PbF_2$, $BiF_3$, LiF, NaF.

5. A method as in claim 2 or 3, characterized in that said rare earth Tr is gadolinium (Gd).

6. A method as in claim 1, characterized in that said fluoride is chosen out of $PbF_2$, $BiF_3$, LiF, NaF, $AlF_3$.

## Revendications

1. Procédé de fabrication de guides optiques pour l'infrarouge moyen dans un substrat de matière vitreuse, qui comprend les phases de masquage des surfaces du substrat, de manière à laisser libres seulement les régions où l'on doit fabriquer les guides optiques, et de diffusion d'un matériau dopant qui est un cation apte à augmenter l'indice de réfraction dans la région du substrat où il diffuse, la diffusion étant obtenue par immersion du substrat masqué dans un sel fondu, dans une solution ou dans une suspension colloïdale d'un composé dopant et étant amorcée par une température élevée et éventuellement par un champ électrique, caractérisé en ce que ledit substrat est fabriqué en verre de fluorure de zirconium et le cation dans le composé dopant est lié à un fluorure.

2. Procédé suivant la revendication 1, caractérisé en ce que le verre de fluorure de zirconium a une composition du type $ZrF_4:BaF_2:TrF_3:X_aF_b$, où Tr est une terre rare quelconque, X est l'atome d'un élément dont la variation de concentration ou dont la substitution détermine la variation désirée de l'indice de réfraction et a, b sont le nombre d'éléments X et F par molécule.

3. Procédé suivant la revendication 2, caractérisé en ce que ladite composition comprend en outre $AlF_3$.

4. Procédé suivant l'une ou l'autre des revendications 2 et 3, caractérisé en ce que ledit composé $X_aF_b$ est choisi entre $PbF_2$, $BiF_3$, LiF, NaF.

5. Procédé suivant l'une ou l'autre des revendications 2 et 3, caractérisé en ce que ladite terre rare Tr est le gadolinium (Gd).

6. Procédé suivant la revendication 1, caractérisé en ce que ledit fluorure est choisi entre $PbF_2$, $BiF_3$, LiF, NaF, $AlF_3$.

**Ansprüche**

1. Verfahren zur Herstellung optischer Leiter für das mittlere Infrarot in einem Substrat aus Glasmaterial, umfassend die Schritte, daß man die Substratoberflächen maskiert und hierbei nur diejenigen Bereiche freiläßt, in denen der optische Leiter herzustellen ist, und man Dotierungsmaterial diffundiert, das aus einem Kation besteht, das die Brechzahl in den Substratbereichen erhöht, in die es diffundiert, wobei man die Diffusion durch Eintauchen des maskierten Substrats in ein geschmolzenes Salz, in eine Lösung oder in eine kolloidale Suspension einer Dotierungsverbindung durchführt und sie durch hohe Temperatur und ggf. durch ein elektrisches Feld in Gang setzt, dadurch gekennzeichnet, daß das Substrat aus Fluorzirkonatglas besteht und das Kation in der Dotierungsverbindung an ein Fluorid gebunden ist.

2. Verfahren nach Anspruch 1, dadurch gekennzeichnet, daß das Fluorzirkonatglas eine Zusammensetzung der Art $ZrF_4:BaF_2:TrF_3:X_aF_b$ hat, wobei Tr = eine seltene Erde, X = Atom eines Elements, dessen Konzentrationsänderung oder dessen Substitution die geforderte Brechzahländerung bestimmt, und a, b = Zahl der Elemente X bzw. F je Molekül.

3. Verfahren nach Anspruch 2, dadurch gekennzeichnet, daß die Zusammensetzung weiterhin $AlF_3$ umfaßt.

4. Verfahren nach Anspruch 2 oder 3, dadurch gekennzeichnet, daß die Verbindung $X_aF_b$ unter den folgenden Verbindungen ausgewählt ist: $PbF_2$, $BiF_3$, LiF, NaF.

5. Verfahren nach Anspruch 2 oder 3, dadurch gekennzeichnet, daß die seltene Erde Tr Gadolinium (Gd) ist.

6. Verfahren nach Anspruch 1, dadurch gekennzeichnet, daß das Fluorid unter den folgenden Verbindungen ausgewählt ist: $PbF_2$, $BiF_3$, LiF, NaF, $AlF_3$.